## Europäisches Patentamt
## European Patent Office
## Office européen des brevets

(19)

(11) Veröffentlichungsnummer : **0 200 709**
**B1**

(12)

# EUROPÄISCHE PATENTSCHRIFT

(45) Veröffentlichungstag der Patentschrift :
02.11.89

(21) Anmeldenummer : 86890046.5

(22) Anmeldetag : 27.02.86

(51) Int. Cl.⁴ : **G 01 L 19/06**, G 01 L 9/08,
G 01 L 23/10

(54) Druckaufnehmer.

(30) Priorität : 05.03.85 AT 655/85

(43) Veröffentlichungstag der Anmeldung :
05.11.86 Patentblatt 86/45

(45) Bekanntmachung des Hinweises auf die Patenterteilung : 02.11.89 Patentblatt 89/44

(84) Benannte Vertragsstaaten :
CH DE FR GB IT LI

(56) Entgegenhaltungen :
DE–A– 2 544 505
DE–A– 3 421 149
DE–B– 1 573 618

(73) Patentinhaber : AVL Gesellschaft für Verbrennungskraftmaschinen und Messtechnik mbH.Prof.Dr.Dr.h.c.
Hans List
Kleiststrasse 48
A-8020 Graz (AT)

(72) Erfinder : Stubenberg, Johann, Dr.
Gleichenberg 2
A-8344 Dorf (AT)
Erfinder : Denk, Heimo, Dipl.-Ing.
St. Radegundstrasse 30b
A-8045 Graz (AT)
Erfinder : Zeiringer, Rudolf, Ing.
Hilmgasse 15
A-8010 Graz (AT)

(74) Vertreter : Krause, Walter, Dr. Dipl.-Ing. et al
Postfach 200 Singerstrasse 8
A-1010 Wien (AT)

EP 0 200 709 B1

## Beschreibung

Die Erfindung bezieht sich auf einen Druckaufnehmer mit mindestens einem in einem Gehäuse angeordneten Meßelement, sowie einer mit dem Gehäuse fest verbundenen und dieses gegen das zu vermessende Medium abdichtenden Plattenmembrane, welche mit dem Meßelement zur Übertragung des zu messenden Druckes in Verbindung steht und welche anschliessend an ihren peripheren Bereich, in dem sie mit dem Gehäuse verbunden ist, einen ringförmigen Bereich sowie einen zentralen Bereich aufweist.

Ein Druckaufnehmer dieser Art ist z. B. in der AT-PS 283 010 beschrieben. Hierbei ist die Plattenmembrane durch die positive Vorspannung des Meßelementes nach außen gewölbt. Daher kommt es bei Temperaturschocks, wie sie bei Druckmessungen an Medien mit stark wechselnden Temperaturbelastungen, beispielsweise in Brennräumen von Verbrennungskraftmaschinen, Raketen, Explosionskammern u.s.w. vorkommen, infolge der viel rascheren Erwärmung des Membranmittelteiles zu einer Vergrößerung der Wölbung und somit zu einer Verkleinerung der Vorspannung durch die Membran. Der zu messende Druck bzw. Druckverlauf wird dadurch verfälscht und es kommt zu einer zu niedrigen Druckanzeige.

Die in den AT-PSen 264.156 und 258.610 beschriebenen Druckaufnehmer weisen ebenfalls eine nach außen gewölbte Plattenmembrane auf, jedoch mit einem verdickten zentralen Bereich, der im ersten Fall mit einem tellerartigen Ansatz und im zweiten Fall an der Außenseite mit einer Schutzscheibe aus wärmeisolierendem Material versehen ist. Durch diese Maßnahmen sollen bei schroffem Temperaturwechsel die dadurch bedingten Wärmespannungen unterdrückt bzw. die Formänderungen verzögert werden. Es hat sich aber gezeigt, daß mit beiden Ausführungen eine zufriedenstellende Kompensation der Temperaturschockdrift unmöglich ist. Im ersten Fall ist es der Spalt zwischen der zu schützenden Membrane und dem tellerartigen Ansatz, der sich je nach dem Grad seiner Verschmutzung verschieden auf das Meßergebnis auswirken kann. Im zweiten Fall sind es die Gasaustauschbewegungen in und aus dem Spalt, die bei Bewegung der Membrane im Meßbetrieb, insbesondere bei höherfrequenten Druckschwankungen, auftreten und die Temperatur der Membrane zusätzlich sehr aufschaukeln und damit das Meßergebnis ungünstig beeinflussen können.

Der Erfindung liegt die Aufgabe zugrunde, diese Mängel zu beheben und einen Druckaufnehmer zu schaffen, bei dem die bei einer plötzlichen Erwärmung durch das zu vermessende Medium hervorgerufene Vorspannungsverminderung im Meßgerät selbsttätig ausgeglichen wird.

Die Erfindung geht von dem Gedanken aus, zum Zwecke der Temperaturkompensation die Plattenmembrane so auszubilden, daß bei plötzlicher Erwärmung durch das zu vermessende Medium (Temperaturschock) eine Vorspannungsvergrößerung hervorgerufen wird, welche die Vorspannungsverminderung, die im Meßelement entsteht, kompensiert.

Ausgehend von einem Druckaufnehmer der eingangs umrissenen Art wird diese Aufgabe erfindungsgemäß dadurch gelöst, daß der ringförmige Bereich der Plattenmembrane im vom zu messenden Druck nicht beaufschlagten Zustand gewölbt ist oder konisch verläuft und sich in das Gehäuseinnere hinein erstreckt.

Aufgrund der nach innen gerichteten Wölbung od. dgl. kommt es dabei durch die normalerweise bei Plattenmembranen ohne Hitzeschild auftretende raschere Erwärmung des Membranmittelteiles zu der für die Kompensation erforderlichen Vorspannungsvergrößerung. Damit ist auf einfache Weise bezüglich der schädlichen Wärmedehnungen, hervorgerufen durch Temperaturschocks, eine optimale Kompensation ermöglicht.

In der US-PS 3 801 838 sowie in der AT-PS 348 794 sind Druckaufnehmer beschrieben, bei welchen der zentrale Bereich der Membrane als Druckübertragungskörper verdickt ausgebildet ist. Im ringförmigen Bereich der Membrane sind Ringzonen verminderten Querschnittes angeordnet, welche eine Übertragung der Vorspannung von dem zentralen Bereich der Membrane auf deren peripheren Bereich unterbinden sollen bzw. die Elastizität der in der Ausgangslage ebenen Membrane so erhöhen, daß sowohl ein Nachaußen-Wölben als auch ein Nach-innen-Wölben der Membrane durch äußere Druckbelastung möglich ist. Eine dabei gelegentlich infolge der Druckbelastung auftretende Wölbung der unbelastet ebenen Membrane nach innen liegt in der Größenordnung von wenigen $\mu$m. Sie kann somit die Vorspannungsverminderung, welche im Meßgerät bei plötzlich auftretender Erwärmung entsteht, nicht kompensieren.

Für die praktische Ausgestaltung des erfindungsgemäßen Druckaufnehmers bieten sich verschiedene Lösungen an. So kann nach einer ersten Lösung im nichteingebauten Zustand der ringförmige Bereich der Plattenmembrane im Vergleich zum Einbauzustand tiefer ausgeführt sein und so im Einbauzustand kraftschlüssig mit positiver Vorspannung am Meßelement aufliegen. Dies hat den Vorteil, daß keine aufwendige feste Verbindung zwischen der Plattenmembrane und dem Meßelement nötig ist.

Bei einer zweiten Lösung ist die Plattenmembrane eben gefertigt, und ihr zentraler Bereich ist so am Meßelement befestigt, daß bei entsprechend großer negativer Vorspannung der ringförmige Bereich sich in das Gehäuseinnere hinein erstreckt. Hiedurch wird eine Vereinfachung der Fertigung erreicht, die sich insbesondere bei einer Massenfertigung sehr vorteilhaft auswirkt.

Schließlich sieht die Erfindung vor, daß der zentrale Bereich, wie an sich bekannt, verstärkt ausgebildet ist und daß dieser Bereich mit dem Meßelement, vorzugsweise über einen Ansatz desselben, fest verbunden ist. Dabei kann die Verbindung zwischen dem zentralen Bereich der Plattenmembrane und dem Meßelement beispielsweise durch Schweißen erfolgen.

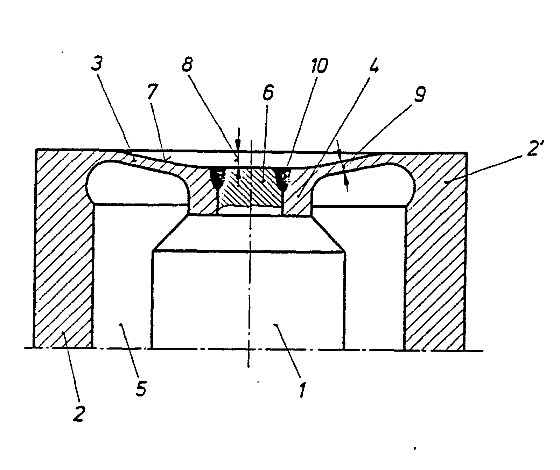

Die Erfindung wird nachfolgend anhand eines Ausführungsbeispieles, welches in der Zeichnung im Mittelschnitt dargestellt ist, näher erläutert.

Das Meßelement 1 ist von einem Gehäuse 2 umgeben, welches an der Stirnseite eine mit diesem aus einem Stück gefertigte Plattenmembrane 3 aufweist. Diese Plattenmembrane 3 weist einen Teil 7 auf, der als Wölbung oder Konusfläche ausgeführt ist und samt einer Verstärkung 4, die im zentralen Bereich der Plattenmembrane 3 angebracht ist, in das Innere 5 des Gehäuses 2 hineinragt. Die Verstärkung 4 umfaßt den zylindrischen Ansatz 6 des Meßelementes 1 und ist mit diesem, beispielsweise durch Schweißung, vorzugsweise Elektronenstrahlschweißung, fest verbunden.

Der nach innen gerichtete Teil 7 der Plattenmembrane 3 kann vorzugsweise schon bei der Fertigung der Plattenmembrane vorgesehen werden. Es besteht dann die Möglichkeit, die Membrane mit positiver, negativer oder ohne Vorspannung zu montieren. Der in das Gehäuseinnere 5 ragende Teil 7 der Plattenmembrane 3 kann jedoch auch bei einer eben gefertigten Membrane durch eine entsprechend große negative Vorspannung bei der Montage erzeugt werden. Dabei ist natürlich eine solide Befestigung des zentralen Bereiches 4 der Plattenmembrane 3 am Meßelement 1 Voraussetzung, wie bei dem vorstehend beschriebenen Ausführungsbeispiel durch den ringförmigen Schweißbereich 10 zwischen dem verstärkten zentralen Bereich 4 der Plattenmembrane 3 und dem zylindrischen Ansatz 6 des Meßelementes 1 angedeutet ist.

Um zu erreichen, daß der durch die erfindungsgemäß ausgebildete Plattenmembrane 3 hervorgerufene Effekt die Temperaturschockdrift des Meßelements 1 nicht nur der Größe nach, sondern auch entsprechend dem Driftverlauf gut kompensiert, können folgende Details empirisch oder auf dem Wege von Berechnungen optimiert werden :

Form und Größe, insbesonders der Tiefe 8 des nach innen gerichteten Teiles 7 der Plattenmembrane 3 im Verhältnis zum Innen- oder Außendurchmesser des Gehäuses 2

Positive bzw. negative Membranvorspannung

Massenverhältnis zwischen dem verstärkten zentralen Bereich 4 der Plattenmembrane 3 und dem maßgeblichen Teil 2' des Gehäuses 2

Spezielle Formgebung des zentralen Bereiches 4 der Plattenmembrane 3 und des maßgeblichen Teiles 2' des Gehäuses 2 zur schnelleren bzw. langsameren Wärmeleitung

Membranwandstärke 9.

Die Erfindung ist keinesfalls auf das beschriebene Ausführungsbeispiel beschränkt, vielmehr sind zahlreiche Varianten im Rahmen der Erfindung möglich. So kann die Plattenmembrane, allenfalls mit einem Außenring versehen, als separates Stück ausgeführt und mit dem Gehäuse verschweißt sein, wobei auch die Membranvorspannung bestimmt werden kann. Zur Erzielung einer bestimmten Elastizität der Plattenmembrane und auch zur Beeinflussung der Wärmeleitung zwischen Plattenmembrane und Gehäuse, kann das Gehäuse im Bereich der Plattenmembrane mit einer entsprechenden Ausnehmung versehen sein.

**Patentansprüche**

1. Druckaufnehmer mit mindestens einem in einem Gehäuse angeordneten Meßelement, sowie einer mit dem Gehäuse fest verbundenen und dieses gegen das zu vermessende Medium abdichtenden Plattenmembrane, welche mit dem Meßelement zur Übertragung des zu messenden Druckes in Verbindung steht und welche anschließend an ihren peripheren Bereich, in dem sie mit dem Gehäuse verbunden ist, einen ringförmigen Bereich sowie einen zentralen Bereich aufweist, dadurch gekennzeichnet, daß der ringförmige Bereich (7) der Plattenmembrane (3) im vom zu messenden Druck nicht beaufschlagten Zustand gewölbt ist oder konisch verläuft und sich in das Gehäuseinnere hinein erstreckt.

2. Druckaufnehmer nach Anspruch 1, dadurch gekennzeichnet, daß im nicht-eingebauten Zustand der ringförmige Bereich (7) der Plattenmembrane (3) im Vergleich zum Einbauzustand tiefer ausgeführt ist und so im Einbauzustand kraftschlüssig mit positiver Vorspannung am Meßelement (1) aufliegt.

3. Druckaufnehmer nach Anspruch 1, dadurch gekennzeichnet, daß die Plattenmembrane (3) eben gefertigt ist und daß ihr zentraler Bereich (4) so am Meßelement (1) befestigt ist, daß bei entsprechend großer negativer Vorspannung der ringförmige Bereich (7) sich in das Gehäuseinnere hinein erstreckt.

4. Druckaufnehmer nach Anspruch 1 oder 3, dadurch gekennzeichnet, daß der zentrale Bereich (4), wie an sich bekannt, verstärkt ausgebildet ist und daß dieser Bereich (4) mit dem Meßelement (1), vorzugsweise über einen Ansatz (6) desselben, fest verbunden ist.

**Claims**

1. A pressure transducer comprising one or more measuring elements situated in a housing, and a plate membrane permanently attached to the housing and sealing the latter against the medium to be measured, which membrane is connected to said measuring element, thereby transmitting the pressure to be measured, and which, adjacent to its periphery along which it is connected to the housing, has an annular area bordering on a center area, wherein said annular area (7) of said plate membrane (3) has a curved or conical shape and extends into the interior of the housing, when it is not subject to the pressure to be measured.

2. A pressure transducer according to claim 1, wherein the annular area (7) of the plate membrane (3) is higher in its non-assembled state than in the assembled one, such that it is pressed against the measuring element (1) with a positive pre-tension in its assembled state.

3. A pressure transducer according to claim 1, wherein the plate membrane (3) is flat, and wherein its center area (4) is attached to the measuring element (1) in such a way that the annular area (7) extends into the interior of the housing if the negative pre-tension is large enough.

4. A pressure transducer according to claim 1 or 3, wherein the center area (4) is thickened in a known manner, and wherein said area (4) is permanently attached to the measuring element (1), preferably by means of a projection (6) on the latter.

## Revendications

1. Capteur de pression comportant au moins un élément de mesure placé dans un boîtier ainsi qu'une membrane en forme de plaque reliée solidairement au boîtier et assurant son étanchéité par rapport au fluide à mesurer, membrane qui est reliée à l'élément de mesure pour transmettre la pression à mesurer et comporte une zone annulaire adjacente à sa zone périphérique, par laquelle elle est reliée au boîtier ainsi qu'une zone centrale, capteur caractérisé en ce que la zone annulaire (7) de la membrane en forme de plaque (3) est bombée ou conique et est concave vers l'intérieur du boîtier lorsqu'elle est à l'état non soumis à la pression à mesurer.

2. Capteur de pression selon la revendication 1, caractérisé en ce que la membrane en forme de plaque (3) à l'état non monté présente une zone annulaire (7) qui est plus concave qu'à l'état monté et s'appuie ainsi avec une précontrainte positive contre l'élément de mesure (1), par une liaison par la force à l'état monté.

3. Capteur de pression selon la revendication 1, caractérisé en ce que la membrane en forme de plaque (3) est réalisée plane et en ce que sa zone centrale (4) est fixée à l'élément de mesure (1) de manière que, pour une précontrainte négative d'amplitude correspondante, la zone annulaire (7) s'étende à l'intérieur du boîtier.

4. Capteur de pression selon la revendication 3 ou 4, caractérisé en ce que la zone centrale (4) est réalisée renforcée de manière connue en soi et en ce que cette zone (4) est reliée solidairement à l'élément de mesure (1), de préférence par un prolongement (6) de celui-ci.